# EUROPEAN PATENT SPECIFICATION

(11) **EP 4 021 707 B1**
(45) Date of publication and mention of the grant of the patent: **04.10.2023**
(21) Application number: 20771776.0
(22) Date of filing: 28.08.2020
(51) Int. Cl.: B29C 67/00, H01J 37/26, H01J 37/20, H01J 37/00, B29C 67/20, G01N 1/28, G01N 1/36, G01N 1/40, G01N 1/42

(54) **METHOD FOR MANUFACTURING A HOLEY FILM, IN PARTICULAR FOR ELECTRON MICROSCOPY APPLICATIONS**
VERFAHREN ZUR HERSTELLUNG EINES LOCHFILMES, SPEZIELL ZUR ANWENDUNG IN DER ELEKTRONENMIKROSKOPIE
PROCÉDÉ DE FABRICATION D'UNE COUCHE TROUÉE, SPÉCIALEMENT POUR LA MICROSCOPIE ÉLÉCTRONIQUE

(30) Priority: 30.08.2019 LU 101373
(43) Date of publication of application: 06.07.2022
(73) Proprietor: Westfälische Wilhelms-Universität Münster, 48149 Münster (DE)
(72) Inventor: SELENSCHIK, Philipp, 49159 Muenster (DE); NUESSE, Harald, 49808 Lingen (DE); KLINGAUF, Juergen, 48163 Muenster (DE)
(74) Representative: Schiweck Weinzierl Koch Patentanwälte Partnerschaft mbB
(86) International application number: PCT/EP2020/074109
(87) International publication number: WO 2021/038058

(56) References cited:
- WO-A1-2007/114421
- WO-A2-2012/094634
- JP-A- 2010 070 648

## Description

Sample preparation for classical transmission electron microscopy (TEM) requires the (biological) sample to be chemically fixed and embedded in a resin. Depending on the sample, it has to be cut and the contrast enhanced by staining it with heavy metals. In a typical workflow, the thin slices are then transferred onto meshgrids coated with homogeneous, ideally flat polymer films made e.g. of thermoplastic resins to mechanically support the lamellae and eventually investigated.

Samples for single particle analysis or in material science sometimes provide little contrast. Imaging those on finitely thick sample supports like carbon deteriorates the signal/noise ratio due to inelastic scattering originating from the support. Initial attempts to overcome this limit included the development of lacey carbon films (e.g. Fukami, A. and K. Adachi (1965)). Based on water droplet templating of randomly oriented water droplets with varying diameters, polymers like cellulose acetate butyrate were employed and the holey film transferred to TEM grids. The polymer is then replaced with carbon and eventually coated with a homogeneous, continuous thin (≈ 5 nm) carbon film to support the sample.

The development of cryogenic (cryo-) EM provided a way to investigate samples in a near-to native condition. For single particle cryo-EM, samples are usually plunge frozen in a cryogen that preserves them in a liquid-like environment (vitrification, Adrian, M., J. Dubochet, et al. (1984)). Recent advances in detector and software development render cryo-EM an attractive alternative to X-ray crystallography if e.g. protein structures are to be solved (Cheng, Y. (2015), Grassucci, R. A. et al. (2007)). In contrast to lacey carbon films, sample supports providing a defined pattern of holes with respect to both size and pitch facilitate automatized image analysis, especially since many thousand images (recorded at low dose to minimize beam-induced damage/sample movement) have to be averaged. Up to date, several methods for the manufacture of holey films with a predetermined/regular pattern are known.

WO 2007/114421 discloses the formation of a porous film using an amphiphilic compound together with a polymer compound to make a coating on a substrate, subsequent water droplet formation by adjusting temperature near to dew point and thus yielding a porous film.

According to a first method which is disclosed in US patent US 6,821,692 B1 or Ermantraut, E., K. Wohlfart, et al. (1998)), a wafer is coated with glutaraldehyde cross-linked gelatine and photoresist and is lithographically structured. The gelatine layer, which functions as a separation layer, is enzymatically digested. The structured photoresist is transferred onto a TEM grid and coated with carbon or another material. Finally, the photoresist is dissolved in an appropriate solvent.

According to a second method (disclosed in US patent US 7,713,053 B2 or Quispe, J., J. Damiano, et al. (2007)) a wafer is coated with a photoresist. The coated wafer is then exposed to light through a photomask and functions as an etch mask in order to structure the wafer (e.g. coated with a desired substrate material) by reactive ion etching (RIE). In the next step the photoresist is dissolved and the wafer is coated with a release layer which is often sodium meta-phosphate. The separation layer is then coated with carbon. Finally, the structured carbon film is floated off the separation layer in water and ultimately transferred onto the TEM grid.

According to a third method disclosed in Chester, D. W., J. F. Klemic, et al. (2007), a PDMS stamp is coated with a polymer solution and transferred onto a glass surface by micro contact printing ("stamped"). The resulting structured polymer is floated off the glass substrate in water and then transferred onto TEM grids and further processed.

All the above-mentioned manufacturing methods are inflexible with regard to the obtained hole sizes. For each diameter a separate master has to be manufactured. The first and the second methods have the further disadvantage that the release layer needs to be present and therefore the substrates are not directly reusable. In order to reuse the substrates, the wafer must be cleaned and a new gelatine/photoresist layer needs to be provided thereon after the structured photoresist has been released from the substrate. After floating off of the structured carbon layer which has been structured by means of the etched wafer, a new separation layer has to be generated. Both processes are time-consuming and inefficient.

In view of the above-mentioned problems, the present invention aims to provide a time- and cost-efficient method for manufacturing holey films with a predetermined or well-defined, yet flexibly adjustable geometry.

In various embodiments, a method for manufacturing a holey film is provided. The method includes providing a substrate having first regions which comprise a hydrophilic substance. The method further comprises cooling the substrate to a temperature which is equal to or lower than the dew point to induce selective condensation of water on the first regions. The method further comprises applying a non-water-soluble polymer onto to substrate comprising the water droplets, the polymer forming a holey polymer layer on the substrate. The method further comprises detaching the holey polymer layer from the substrate after it has hardened/solidified. The method further comprises depositing a film material on the holey polymer layer to form a film thereon. The method further comprises dissolving the polymer layer. The method according to the invention may in particular comprise the individual steps in the order in which they have been recited.

According to the method of the present invention, a functionalized substrate (i.e. a substrate with a patterned or structured surface) is cooled to a temperature corresponding to or being lower than the dew point of its surrounding atmosphere in order to induce selective deposition of water on the first regions which are hydrophilic by condensation. The cooling of the substrate may be performed in the open atmosphere, without placing the substrate in a climatized/climatic chamber which is isolated from the surrounding/ambient atmosphere. However, if desired, the substrate may be placed in the climatized chamber in which the atmospheric parameters (air temperature, humidity, etc.) may be set. By doing so, advantageous atmospheric parameters may be chosen such that the deposition of water vapour on the first regions may be accelerated. The water droplets deposited almost exclusively on the first regions form a mask which is used to form a holey negative of a polymeric film. The first regions may have any geometrical shape. The first regions may preferably have a round or oval shape. A typical dimension of the first regions, such as a diameter of a round first region, may be on the order of a few micrometers.

The solvent is preferably chosen such that the water droplets formed on the first regions have a very low solubility in in the solvent of the polymer and are therefore spatially invariant during the time scale of the manufacturing process, i.e. when the polymer or polymer suspension is provided on the surface of the substrate. For example, toluene and/or cyclohexane may be used as solvent (or a mixture thereof), which have a water solubility of 520 mg/l at 20°C and 60 mg/l at 20°C, respectively. In other words, during the application of the polymer, which is dissolved in the solvent, the water droplets remain constant with regard to their size and shape. Thus, the polymer is prevented from being deposited on the first regions by the water droplets covering the first regions. Therefore, the position and the size of the water droplets determine the size and position of the holes in the polymer layer. In addition, the circularity of the water droplets may be increased, i.e. improved, or maintained even in the case of defects/irregularities in the hydrophilic coating of the first regions by the hydrophobic solvent which is applied onto the substrate together with the polymer. After the polymer material deposited on the functionalized substrate has solidified and/or hardened, thus forming the holey polymer layer, it may be detached from the substrate, for example by floating it off the substrate in water. At the end of this process, the holey polymer layer floats on the surface of water, separated from the substrate and may be further processed.

In further embodiments of the method, the substrate may comprise a glass substrate. However, any other material suitable for the purpose of the method described herein may be used. The suitability of the substrate for the purpose of the present method may be determined by its ability to be functionalized with appropriate chemical substances as described herein for structuring the surface of the substrate to provide hydrophilic first regions and preferably a hydrophobic region surrounding the first regions.

In further embodiments of the method the first regions may be comprised in a second region of the substrate which may be hydrophobic. That is, the surface of the (structured/patterned) substrate may be overall hydrophobic except for the first regions which are hydrophilic. In general, the substrate may have a binary pattern consisting of the first regions which correspond to hydrophilic nucleation points and a hydrophobic backfilling which corresponds to the second region. The first regions may be arranged in a regular, well-defined pattern, for example in a regular "gridlike" pattern. The first regions may be surrounded by or fully contained in the second region. By providing hydrophilic first regions which are surrounded by a hydrophobic second region the condensation of water vapour into droplets may be restricted to sites designated by the first regions. The hydrophobic nature of the second region may further prevent water condensation on the second region.

In further embodiments of the method the hydrophilic substance in the first regions may be attached or bonded to the surface of the substrate by covalent bonds. The hydrophilic substance may be bonded to the surface of the substrate by illumination with UV light (UV lithography). The substrate may be seen to be recyclable in that it can be used multiple times for the purpose of this method. After the polymer layer has been detached (e.g. floated off) from the surface of the substrate, residual polymer that remained on the substrate can be removed by dip coating it in appropriate solvents, like chloroform, and the substrate comprising the binary pattern featuring the first regions and the second region may be reused (used iteratively). This "recycling" of the substrate saves time, because it does not require any intermediate steps such as coating with gelatine and/or photoresist or providing sacrificial release layers as in accordance with methods of prior art.

In further embodiments of the method, providing the substrate may comprise the following steps: depositing (3-glycidyloxypropyl)trimethoxysilane (GOPTS) on the substrate; providing diamino-poly(ethylene glycol) on the substrate; providing 3-(maleimido)propionic acid N-hydroxysuccinimide ester onto the substrate; providing maleimide-poly(ethylene glycol) (maleimide-PEG) onto the substrate; illuminating the substrate with UV radiation through a photomask; and providing thioalcohol onto the substrate. After the polymer layer has been released from the substrate, polymer residues still bound to the functionalized substrate may be removed and the substrate may be recycled multiple times.

In the first step of preparing the substrate for the use in the present method, (3-glycidyloxypropyl)trimethoxysilane may be applied on the activated substrate (i.e. the pre-cleaned substrate (e.g. by means of piranha solution) without any chemicals bonded to its surface). The (3-glycidyloxypropyl)trimethoxysilane binds covalently to the silanol groups on the surface of the substrate.

The step of providing diamino-poly(ethylene glycol) on the substrate is carried out after the surface of the substrate has been silanized (i.e. depositing (3-glycidyloxypropyl)trimethoxysilane on the substrate, Piehler, J., A. Brecht, et al. (2000)). Then, 3-(maleimido)propionic acid N-hydroxysuccinimide ester (corresponds to a heterobifunctional linker) dissolved in DMF may be provided on the substrate once the (3-glycidyloxypropyl)trimethoxysilane has been reacted with diamino-poly(ethylene glycol) (Waichman, S., C. You, et al. (2011)). Finally, methoxypolyethylene glycol maleimide dissolved in dimethyl sulfoxide (DMSO) may be added onto the substrate before carrying out the lithographic step in which the substrate is illuminated with UV light of appropriate wavelength (240-395 nm for the case of the above mentioned chemical compounds) through a photomask. During the lithographic step, the pattern of the photomask is transferred onto the substrate. Illumination by UV light in the presence of methyl terminated maleimide-PEG creates a pattern on the surface of the substrate which corresponds to the transparent regions of the photomask. During the lithographic step, covalent bonds are formed between the methoxypolyethylene glycol maleimide molecules and the surface of the substrate. The reaction only takes place in regions illuminated by UV light - those regions correspond to the first regions. In the remaining region of the substrate, which is not illuminated with UV light, this reaction does not take place - this region corresponds to the second region of the substrate.

After the UV lithographic step, thioalcohol is provided onto the substrate. The hydrophobic thioalcohol reacts with the surface of the substrate which has not been illuminated during the lithographic step, i.e. it reacts only in the second region of the substrate. The thioalcohol may be a thioalkane, for example. In general, it may be advantageous to use a thioalcohol CH₃(CH₂)_{N}SH with N≤16 as any such thioalcohol is fluid at 22-23°C which is assumed to correspond to a common room temperature. For example, hexadecanethiol, 1-pentadecanethiol, dodecanethiol or 1-undecanethiol may be used for that purpose, the first having a melting point in the range of 18-20°C. However, a thioalcohol with N≥16 may be also used. In that case, it may be dissolved in an appropriate solvent first, such as ethanol, or the temperature of the substrate may be increased to or above the melting point of the used thioalcohol.

It is noted that the method of the present invention is not limited to the chemical preparation process of the raw substrate as described above. For example, the steps in which the appropriate chemicals are transferred onto the surface of the raw substrate in a desired pattern of hydrophilic regions, preferably arranged in or surrounded by an otherwise hydrophobic region may be replaced by a micro contact printing process (e.g. Braun, H. G. and E. Meyer (1999)). In general, in further embodiments of the method different chemicals and other preparation processes may be used as long as they result in a substrate having hydrophilic regions surrounded by a neutral or preferably hydrophobic region such that the microstructured substrate may be used for spatially selective deposition of water thereon.

In further embodiments, the method may further comprise the step of adjusting the size of the water droplets by adjusting the incubation time of the substrate and/or the exposure time to humid air. The incubation time of the substrate may be understood as the time during which the substrate is kept at a temperature below the dew point and during which condensation of water on the substrate is promoted. Lowering the temperature of the substrate below the dew point may lead to condensation of water, almost exclusively on the first regions. Increasing the temperature of the substrate above the dew point may lead to evaporation of water from the condensed water droplets back into the surrounding atmosphere. Therefore, by decreasing or increasing the incubation time, the volume of water deposited on the substrate, almost exclusively on the first regions, may be controlled.

Even though condensation of water on the first regions which are hydrophilic is highly favoured over the condensation of water on the second region which is hydrophobic, defects in the form of water formations, i.e. small droplets, in the second region may still occur. Evaporation of water off the surface of the substrate which is predominantly present when the temperature of the substrate is set above the dew point may be used in order to remove those defects. Assuming that those defects formed randomly on the second region of the substrate are smaller in volume compared to the water droplets formed on the first regions, increasing the temperature above the dew point for a predefined period of time, may be used to eliminate the aforementioned defects from the surface of the substrate. Without being bound by theory, it is believed that due to the hydrophobic nature of the second region, the evaporation of water off the second region takes place at a higher rate than the evaporation of water from the hydrophilic first regions. In general, the surface of the substrate may be observed via an inverted microscope during the deposition process of the water droplets. In the case of defects formed on the surface of the substrate, their volume may be calculated. The temperature of the substrate may be increased above the dew point for a period of time which is sufficient to evaporate the volume of water corresponding to the biggest defect, for example, off the surface of the substrate. Alternatively, the surface of the substrate may be observed under the microscope and the temperature of the substrate may be kept above the dew point until a desirable amount of defects have been eliminated.

In further embodiments of the method, adjusting the temperature of the substrate may be performed by means of a thermoelectric cooling element which is in contact with a surface of the substrate. The substrate may be arranged on the thermoelectric cooling element. The thermoelectric cooling element may be used either for heating or for cooling of the substrate. By adjusting the surface temperature of the thermoelectric cooling element being in contact with a surface (e.g. the back surface) of the substrate, the diameter/size of the water condensates forming on the substrate, almost exclusively on the first regions, may be dynamically controlled. The thermoelectric cooling element may include a Peltier element (peltier heat pump).

In further embodiments of the method, the non-water-soluble polymer may comprise polystyrene dissolved in a mixture of cyclohexane and toluene. Other suitable chemicals may be used as long as the polymer mixture applied to the surface of the substrate comprising the water droplets has a sufficiently low water solubility and therefore the water droplets do not diffuse into the polymer mixture on the time scale of the duration of the manufacturing method.

In further embodiments of the method, the step of releasing the holey polymer layer from the substrate may comprise applying a detergent, preferably sodium dodecyl sulfate (SDS), to the holey polymer layer and the substrate and releasing the holey polymer layer from the substrate. Preferably, the holey polymer layer may be floated off the surface of the substrate in preferably deionized water. Suitable detergents may in general include anionic detergents such as sodium laureth sulfate (SLES) or sodium dodecyl benzene sulfonate. Alternatively, other detergents such as cationic, amphoteric or non-ionic detergents may be used, such as Tween 20^{™} (polyoxyethylene(20)-sorbitan-monolaurate), Triton^{™} X-100 (polyethylene glycol *p*-(1,1,3,3-tetramethylbutyl)-phenyl ether) or Victawet^{®} 12.

Applying the detergent (SDS, for example) to the holey polymer (e.g. polystyrene) attached to the substrate may weaken the hydrophobic interaction between the polymer layer and the thioalcohol (hexadecanethiol, for example) layer, thereby acting as a temporary separation layer. This temporary separation layer may enable water to enter between the layers to be separated during the release process. As mentioned previously, after the polymer layer has been detached from the surface of the patterned substrate, the substrate may be reused or "recycled".

In further embodiments of the method, the film material may typically comprise carbon or silicon (di)oxide.

In further embodiments, the method may further comprise adhering/transferring the holey polymer layer onto a grid, preferably a TEM-grid, after the holey polymer layer has solidified and has been detached from the substrate. This may be achieved, for example, by placing TEM-grids, having a circular shape with a diameter of 3.05 mm, for example, on the surface of the released holey polymer layer which is floating on water, such that the holey polymer layer adheres to the TEM-grids. Generally, the polymer layer may have a square or rectangular shape with a side length on the order of the photomask used to generate the pattern, for example 20 mm. The water may be then drained or the TEM-grid with the holy polymer layer adhered thereto may be picked up from the surface of the water by e.g. placing a piece of paper onto the grid-polymer "sandwich" and picking up the piece of paper with the grid-polymer "sandwich" being attached thereto or alternative established methods.

In further embodiments of the method, the holey polymer layer may be attached to the TEM-grid while the film material is deposited thereon. Once the film material has been deposited on the polymer layer, the latter may be dissolved from the "sandwich" structure, such that the holey film comes to rest directly on the TEM grid.

The method of the present invention is particularly useful for the manufacture of holey films for TEM applications where automated analysis of TEM images is employed, in particular in the automated analysis of images obtained by cryogenic TEM, such as TEM images of single proteins, by providing a well-defined or predetermined geometry of the holey film. A well-defined geometry of the holey film may include a holey film with well-defined hole sizes and/or well-defined pitch between central points of the holes in the holey film. Due to the well-defined geometry of the holey films, the algorithm used for the analysis of the images obtained by TEM may operate more efficiently and/or more reliably. In addition, since the bonds between the chemical layers arranged on the substrate, such as the bonds between the surface of the substrate and the (3-glycidyloxypropyl)trimethoxysilane or the bonds between methoxypolyethylene glycol maleimide and 3-(maleimido)propionic acid N-hydroxysuccinimide ester are stable, the substrate may be reused/recycled multiple times for the purpose of the present method.

In the following, the method of the present invention will be described in more detail with reference to the appended figures.
Figs. 1A-1C show schematic views which illustrate the workflow of the method according to the invention.
Figs. 2A-2B show schematic views of the surface of the substrate focusing on surface chemistry.
Figs 3A-3C show microscopic images of the surface of the substrate.
Figs. 4A-4F show schematic views illustrating the manufacturing method of a holey film according to the present invention.
Fig. 5 shows a microscopic image of water droplets on the structured substrate.
Fig. 6 shows an SEM image of a section of a TEM grid comprising a holey film manufactured according to the method of the present invention.
Fig. 7 illustrates a possible experimental setting according to the present invention.
Fig. 8 is a diagram showing statistical data relating to the range of achievable hole diameters in holey films manufactured in accordance with the present invention.
Figs. 9A-C show scanning electron microscopy images of exemplary holey films manufactured in accordance with the present invention.

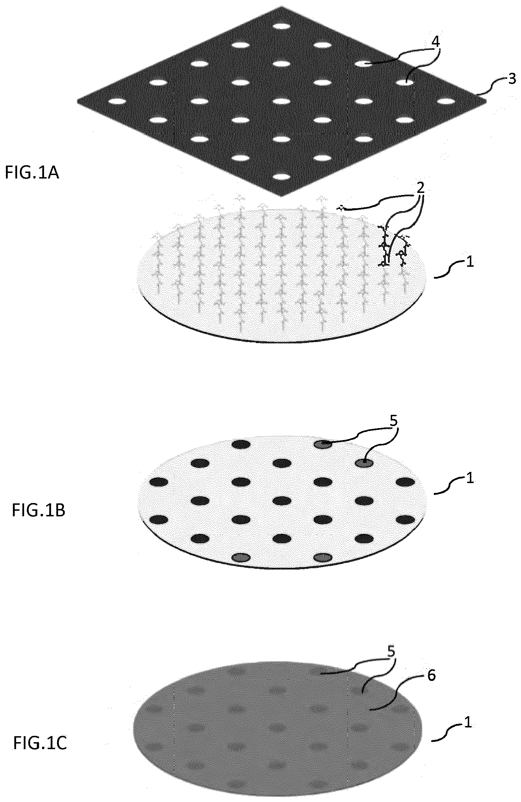

Figs. **1A-1C** show schematic views which illustrate the workflow of the method according to the invention. In figures 1A-1C a section of the substrate 1 is shown throughout various stages of the method of the present invention. In figure 1A, the substrate 1 is shown to comprise a functionalized surface in the form of a surface which is silanized and terminated by 3-(maleimido)propionic acid N-hydroxysuccinimide ester molecules 2. The functionalized surface of the substrate 1 is exposed to UV radiation through a photomask 3 in a lithographic process. The photomask 3 comprises openings 4 through which UV light impinges on the functionalized surface of the substrate 1. During the lithographic process, covalent bonds are formed between the functionalized surface of the substrate 1, in particular between the 3-(maleimido)propionic acid N-hydroxysuccinimide ester molecules 2 and the methoxypolyethylene glycol maleimide molecules. Those regions correspond to first regions 5 which are hydrophilic. The shape of the first regions 5 corresponds to the shape of the openings 4 provided in the lithographic mask 3. The surface of the substrate 1 surrounding the first regions 5 has not been exposed to UV light during the lithographic process and is therefore not coated with maleimide-PEG molecules. In order to minimize the hygroscopic attraction of the second region 6, a hydrophobic substance may be applied to the surface of the substrate 1 which binds to the surface of the substrate 1 where no reaction has taken place during the UV lithography process. For example, thioalcohol may be applied to the surface of the substrate 1. The part of the functionalized surface of the substrate 1 where the thioalcohol binds to the functional surface of the substrate 1 corresponds to the second region 6.

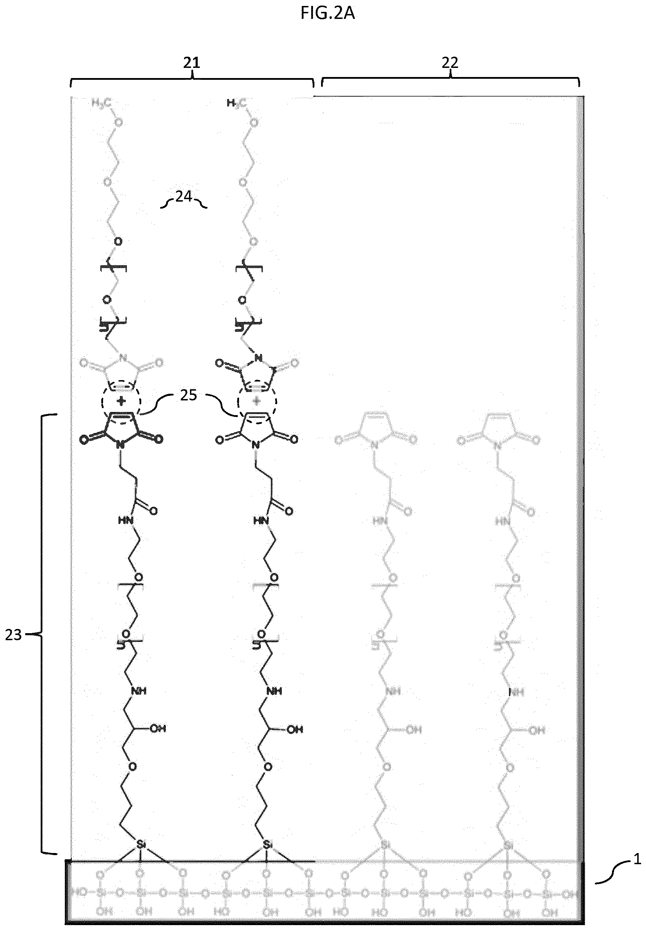

A more detailed view on the chemical processes which take place during the method of the present invention is presented in **Figs 2A-2C****.** The raw substrate is denoted with numeral 1 in figures 2A-2C. As shown in **Fig. 2A****,** the surface of the substrate 1 has been functionalized by silanizing its surface, i.e. depositing (3-glycidyloxypropyl)trimethoxysilane thereon, then providing providing diamino-poly(ethylene glycol) on the substrate 1 which reacts with the (3-glycidyloxypropyl)trimethoxysilane. Then, 3-(maleimido)propionic acid N-hydroxysuccinimide ester is applied onto the surface of the substrate 1 covered with diamino-poly(ethylene glycol). At this stage, the surface of the substrate 1 is covered by a functional layer denoted with reference number 23. Next, methoxypolyethylene glycol maleimide is applied on the substrate 1 before exposing the substrate to UV radiation in a lithographic step. During the lithographic process the methoxypolyethylene glycol maleimide molecules 24 bind to the functionalized surface 23 of the substrate 1 at first binding sites 25 which correspond to regions 21 illuminated by UV light. Those regions correspond to first regions. The second region 22 corresponds to the region where the UV light is blocked by the photomask. Therefore, in the second region 22, the methoxypolyethylene glycol maleimide cannot bind to the surface of the substrate 1.

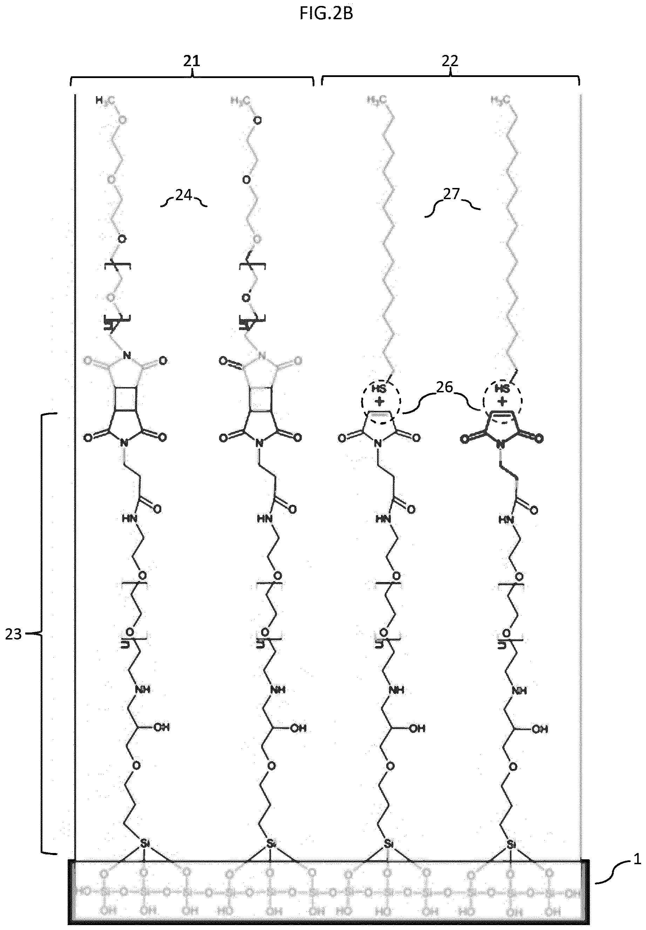

The chemical structure of the surface of the substrate 1 resulting from the UV lithographic process is shown in **Fig. 2B** where it can be seen than the methoxypolyethylene glycol maleimide molecules 24 are connected at the surface of the substrate 1 in the first region 21 by covalent bonds. In Fig. 2B, the treatment of the second region 22 which has not been illuminated during the UV lithographic step is also indicated. Namely, a thioalcohol 27 (hexadecanethiol in this example) is applied to the surface of the substrate 1. Depositing thioalcohol 27 on the surface of the substrate 1 - which comprises already "reacted" first regions 21 and "unreacted" second region 22 - leads to binding thereof at second reaction sites 26 by formation of covalent bonds. Therefore, the thioalcohol only reacts on portions of the surface of the substrate 1 which correspond to the "unreacted" surface of the substrate 1.

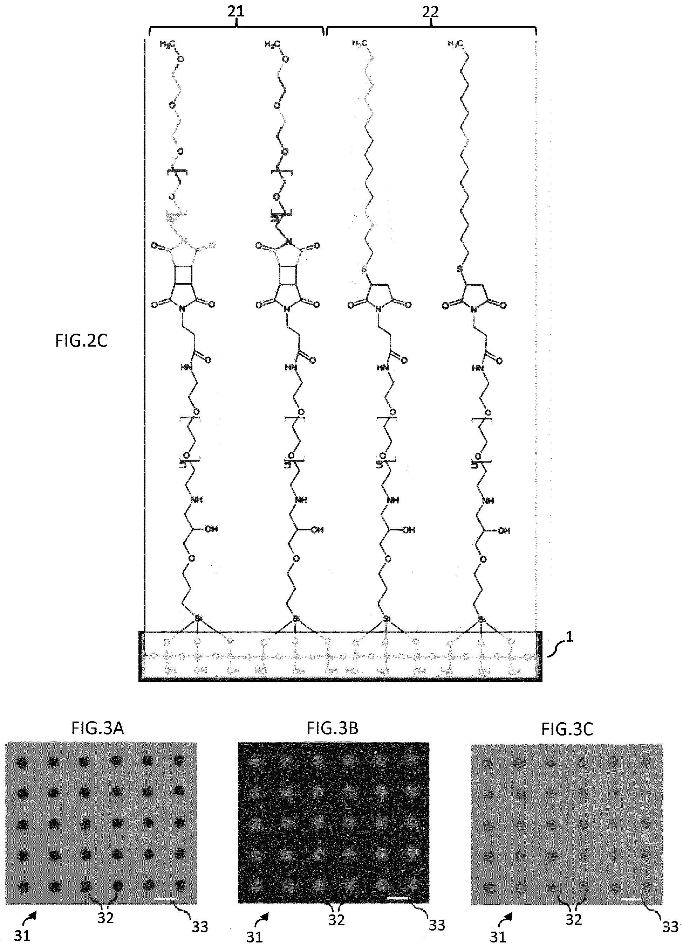

The final state of the substrate 1 which comprises hydrophilic first regions 21 (corresponding to first regions 5 in Figs. 1B and 1C) and hydrophobic second region 22 (corresponds to second region 6 in Fig. 1C) is shown in **Fig. 2C**. The structured/patterned surface of the substrate 1, as shown in Fig. 1C, may be used to control the spatiotemporal condensation of water on the substrate 1. The thus formed surface may be seen to be binary with regard to its wettability.

In **Figs 3A-3C****,** microscopic images of the surface 31 of the substrate 1 from Fig. 1C are shown which have been obtained under a confocal microscope. In **Fig. 3A** the surface 31 of the substrate 1 is shown where a fluorescently (Alexa Fluor^{™} 488 TFP-ester) labelled thioalcohol, namely 16-amino-1-hexadecanethiol, has been used for manufacturing the substrate 1 according to the method of the present invention. In **Fig. 3B** the surface 31 of the substrate 1 is shown where maleimide-PEG glycol-biotin has been fluorescently labelled with Alexa Fluor^{™} 647 Streptavidin. **Fig. 3C** shows a merge of the images shown Figs. 3A and 3B. In each of the figures, a regular "gridlike" arrangement of circular shapes 32 is clearly visible. Those circular shapes correspond to first regions and the remaining surface of the substrate corresponds to the second region. The scale bar 33 which is shown in each of Figs. 3A-3C represents a dimension of 10 µm.

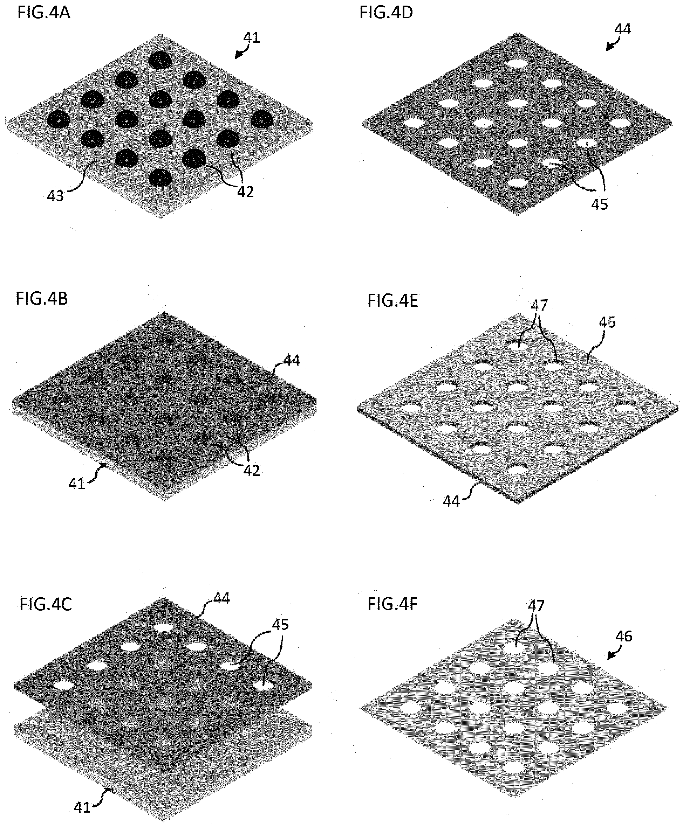

**Figs. 4A-4F** show schematic views in which the manufacturing of a holey film according to the method of the present invention is illustrated. In a first step illustrated in **Fig. 4A****,** a substrate 41 with a patterned/structured surface is used for condensation of water to form droplets 42 on the surface thereof. When the substrate 41 is cooled to a temperature below the dew point, water selectively condenses on the hydrophilic first regions comprising PEG provided on the surface of the substrate 41. The remaining surface of the substrate 41 is preferably hydrophobic and corresponds to the second region 43 from which water is repelled and on which ordinarily water condensation does not take place. Water condensates which have formed on the second region 43 may be considered as defects and removed by adjusting the temperature of the substrate 1 to induce evaporation of water off the substrate 1. The temperature of the substrate 41 may be adjusted by a Peltier element which, for example, may be attached to the backside of the substrate 41.

**Fig. 4B** illustrates the method step in which a non-water-soluble polymer or a polymer with a sufficiently low water solubility is applied onto the substrate 41 comprising the water droplets 42. Due to the presence of the water droplets 42 the non-water-soluble polymer forms a holey polymer layer 44 (holey polymer film) on the substrate 41. In that sense, the pattern of water droplets 42 serves as a negative for the creation of a correspondingly structured polymer layer 42, wherein the polymer is non-water-soluble. The water droplets 42 may be observed with an inverted light microscope in real time and their size may be precisely adjusted by modulating the incubation time before application of the polymer solution. In that manner, the patterned substrate 41 may serve as a template for the formation of water droplets 42 of various sizes since the substrate 41 merely provides a site for the initiation of the condensation process whereas the diameter or the size of the water droplets 42 is determined by the subsequent condensation process. For a given structured substrate 1 the density of the holes formed in the polymer layer remains constant.

**Fig. 4C** illustrates the method step in which the holey polymer layer 44 is detached from the substrate 41 after the former has solidified. The solidification of the polymer layer 44 includes a drying process in which water and solvent molecules transition into the gas phase and leave behind the structured holey polymer layer 44. The holey polymer layer 44 comprises holes 45 which have been formed by virtue of the water droplets 42. The holey polymer layer 44 is detached from the surface of the substrate 41 by floating it off in water. A detergent, for example sodium lauryl sulfate (e.g. 1% (v/v) solution thereof) is applied to the polymer layer 44 and/or the substrate 1 before it is floated off the substrate 1 in order to facilitate the release process. The detached polymer layer 44 is shown in **Fig. 4D****.**

In the manufacture of TEM-grids, the holey polymer layer 44 is usually transferred/adhered to a grid, preferably by placing the TEM-grids on the surface of the released holey polymer layer which is floating on water. The water may then be drained or the grids may be picked up from the surface of the water with the holey polymer layer 44 being attached thereto.

**Fig. 4E** illustrates the method step in which a film material, such as carbon or silicon (di)oxide, is deposited on the holey polymer layer 44 to form a holey film 46 thereon. During coating with the film material, the holey polymer layer 44 is preferably arranged on the grid, as mentioned above. Alternatively, the film material may be deposited on the polymer layer before the holey polymer layer 44 is transferred onto the grid. In any case, the holey film 46 comprises holes/openings 47 which correspond to the holes/openings 45 provided in the holey polymer layer 44.

In a final step illustrated in **Fig. 4F****,** the holey film 46 has been detached from the holey polymer layer 44. This may be done by dissolving the polymer layer 44 from the holey film 46 in appropriate solvents.

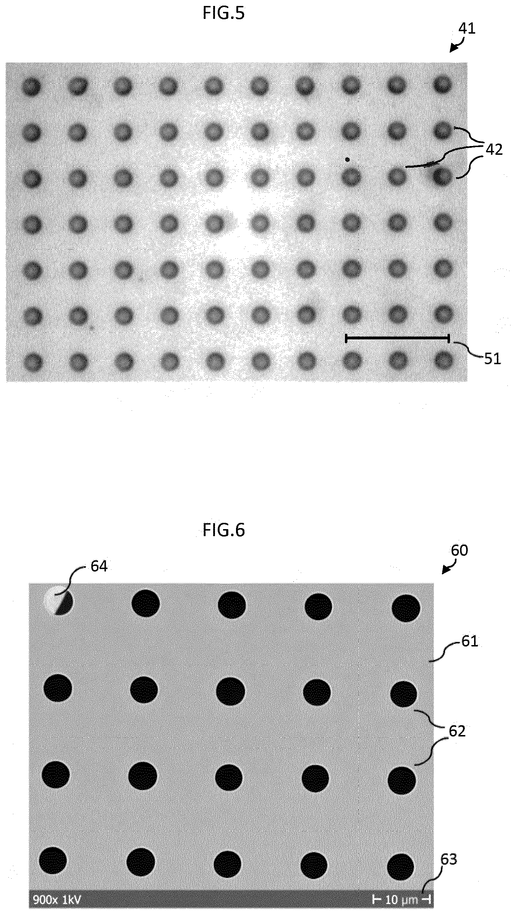

**Fig. 5** shows a microscopic image of water droplets 42 on the structured substrate 41, basically corresponding to the situation shown in Fig. 4A. The scale bar 51 represents a dimension of 35 µm.

**Fig. 6** shows an image obtained by a scanning electron microscope of a section of a TEM grid 60 comprising a holey film 61 manufactured according to the method of the present invention. The holey film 61 comprises openings 62 for the substance to be examined by means of electron microscopy. In the uppermost left opening 62 a portion of the grid bar of the TEM grid 60 is visible through the opening 62. The regular, well-defined geometry of the holes 62 in the holey film 61 allows for automated image analysis.

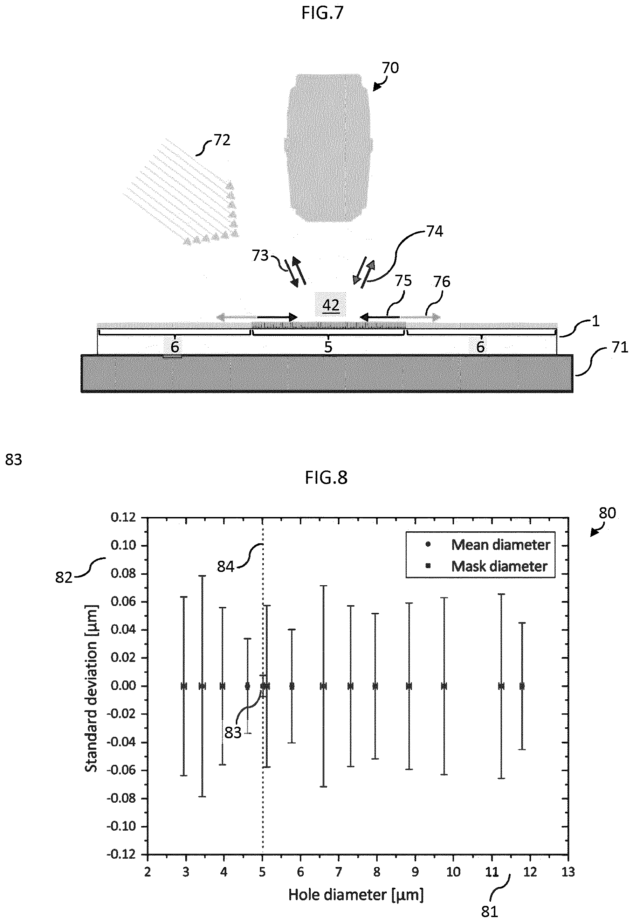

**Fig. 7** illustrates a possible experimental setting according to the present invention which may be used to achieve dynamic regulation of water droplet diameters. The functionalized glass slide serving as substrate 1 is placed on a Peltier element 71 which is used to control the temperature of the substrate 1, in particular to cool it. On the substrate, one hydrophilic first region 5 is shown (area is shown in dark grey), which is flanked by the second regions 6 which are hydrophobic regions (areas are shown in light gray). Cooling of the substrate 1 to the ambient dew point (τ_{ambient}) by the Peltier element 71 results in condensation 73 of water, preferably on the hydrophilic region(s) 5. The initial size of the water droplet 42 is governed by the fixed hole diameter of the photomask used to covalently attach the hydrophilic maleimide-PEG molecules to the functionalized surface of the substrate 1. The condensation 73 of water vapour may be facilitated by applying a flow of humid air 72 onto the substrate 1, e.g. by simply exhaling onto the substrate 1. Larger diameters (compared to the initially transferred ones) of the water droplet 42 can be generated by increasing both the incubation time of the substrate 1 on the Peltier-element 71 and the exposure time of the functionalized substrate 1 to humid air 72. In that case, the temperature T_{Peltier} of the Peltier element 71 is equal to or smaller than τ_{ambient} and the contact line of the water droplets expands 76 onto the hydrophobic regions 6, resulting in increased diameters. Following condensation 73 on the hydrophilic region 5 and for T_{Peltier} > τ_{ambient}, water successively evaporates 74 from the surface of the substrate 1, leading to a recession or contraction 75 of the contact line and a reduction in diameters. Both processes (increase or decrease of droplet diameters) can be controlled and their course can observed via an objective 70 of a (custom-built) microscope in real time. Once the desired droplet 42 diameter is reached, a solution of polystyrene is added to the substrate 1.

The experimental setting depicted in Fig. 7 may be used according to various embodiments of the method for manufacturing a holey film to manufacture holey films with various and precisely selectable hole diameters. In **Fig. 8** a diagram 80 is presented with the x-axis 81 denoting the hole diameter in microns and the y-axis 82 denoting the propagated standard deviation of the hole diameter in microns. In the diagram 80, statistical data relating to achievable hole diameters in polystyrene films with respect to the fixed, weighted mean hole diameter of the photomask (indicated by the data point 83 and the corresponding dotted line 84). The holey, patterned films used for the underlying statistical analysis have been generated based on adjusting the water droplet 42 diameters and by subsequent water droplet templating. Each data point in the diagram 80 (i.e. every data point other than the data point 83 representing the weighted mean hole diameter of the photomask) corresponds to the weighted mean value resulting from the analysis of three independent experiments. The holes of the input mask used to generate the binary pattern on the glass substrate 1 had a mean diameter of 5.02 µm ± 0.00755 µm and a pitch of 14.9 µm ± 0.0351 µm. The error bars for x-and y-values are identical and correspond to the standard deviation. Hole diameters ranging from approximately 0.6 to 2.4-fold of the input hole diameter can be generated reproducibly with high precision, highlighting that a wide range of diameters can be obtained using only one mask which is used to generate the initial "seed" pattern.

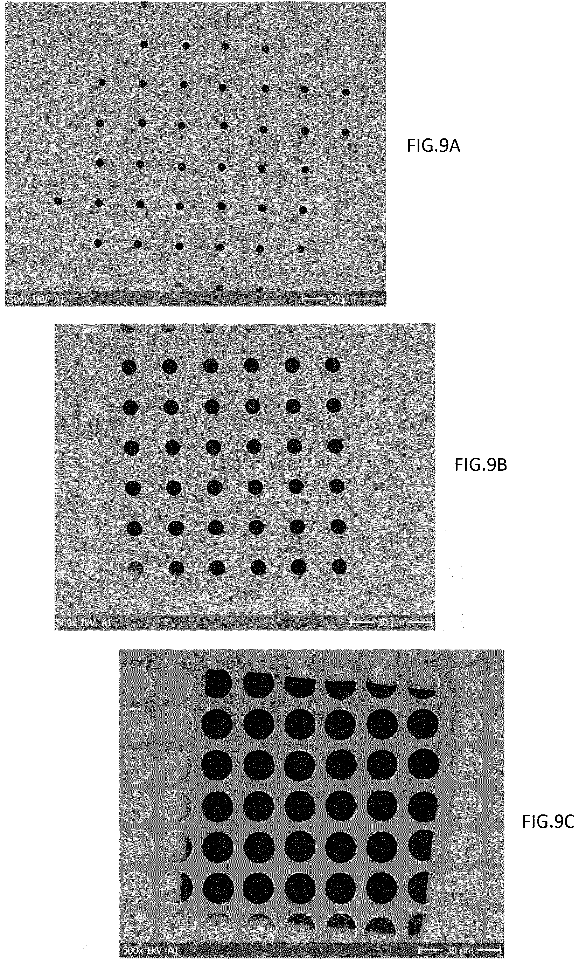

**Figs. 9A-C** show scanning electron microscopy images of exemplary holey films with different hole diameters manufactured according to the manufacturing method of the present invention and highlight the potential range of achievable diameters based on an input mask diameter of 5.02 µm ± 0.00755 µm. It is noteworthy that all samples were generated using the same photomask as for figure 8.

The manufacturing method disclosed herein allows for a dynamic variation of the diameter of the holes in the holey film during the manufacturing process by varying the incubation time before application of the polymer solution on the substrate which, in turn, determines the diameter/size of the water droplets formed on the substrate. In addition, the size of the water droplets may be observed "live" during the manufacturing process and adjustments of the water vapour condensation duration onto the substrate may be made in order to obtain a desired diameter of the water droplets. In that manner, water droplets and consequently holes in the holey film with different diameters (but the same droplet and hole density) may be obtained with the same patterned substrate.

### REFERENCES

1. Fukami, A. and K. Adachi (1965). "A New Method of Preparation of a Self-Perforated Micro Plastic Grid and its Application (1)*." Journal of Electron Microscopy 14(2): 112-118.
2. Adrian, M., J. Dubochet, et al. (1984). "Cryo-electron microscopy of viruses." Nature 308(5954): 32-36.
3. Cheng, Y. (2015). "Single-Particle Cryo-EM at Crystallographic Resolution." Cell 161(3): 450-457.
4. Grassucci, R. A., D. J. Taylor, et al. (2007). "Preparation of macromolecular complexes for cryo-electron microscopy." Nature Protocols 2: 3239.
5. US patent: US 7,713,053 B2
6. Ermantraut, E., K. Wohlfart, et al. (1998). "Perforated support foils with pre-defined hole size, shape and arrangement." Ultramicroscopy 74(1-2): 75-81.
7. US patent: US 6,821,692 B1
8. Quispe, J., J. Damiano, et al. (2007). "An Improved Holey Carbon Film for Cryo-Electron Microscopy." Microscopy and Microanalysis 13(5): 365-371.
9. Chester, D. W., J. F. Klemic, et al. (2007). "Holey carbon micro-arrays for transmission electron microscopy: A microcontact printing approach." Ultramicroscopy 107(8): 685-691.
10. Piehler, J., A. Brecht, et al. (2000). "A high-density poly(ethylene glycol) polymer brush for immobilization on glass-type surfaces." Biosensors and Bioelectronics 15(9-10): 473-481.
11. Waichman, S., C. You, et al. (2011). "Maleimide Photolithography for Single-Molecule Protein-Protein Interaction Analysis in Micropatterns." Analytical Chemistry 83(2): 501-508.
12. Braun, H. G. and E. Meyer (1999). "Thin microstructured polymer films by surface-directed film formation." Thin Solid Films 345(2): 222-228.

## Claims

1. Method for manufacturing a holey film, comprising the following steps:
providing a substrate (1) having first regions which comprise a hydrophilic substance;
cooling the substrate to a temperature which is equal to or lower than the dew point to induce selective condensation of water on the first regions to form droplets;
applying a non-water-soluble polymer onto the substrate comprising the water droplets (42), the polymer forming a holey polymer layer (44) on the substrate;
detaching the holey polymer layer from the substrate after it has solidified;
depositing a film material on the holey polymer layer to form a film thereon; and
dissolving the polymer layer.

2. Method of claim 1, wherein the substrate comprises a glass substrate.

3. Method of claim 1 or 2, wherein the first regions are comprised in a second region which comprises a hydrophobic substance.

4. Method of any one of claims 1 to 3, wherein the hydrophilic substance in the first regions is attached to the surface of the substrate by covalent bonds.

5. Method of any one of claims 1 to 4, wherein providing the substrate comprises:
depositing (3-glycidyloxypropyl)trimethoxysilane on the substrate;
providing diamino-poly(ethylene glycol) on the substrate;
providing 3-(maleimido)propionic acid N-hydroxysuccinimide ester onto the substrate;
providing methoxypolyethylene glycol maleimide onto the substrate;
illuminating the substrate with UV radiation through a photomask;
providing thioalcohol onto the substrate.

6. Method of any one of claims 1 to 5, further comprising:
adjusting the size of the water droplets by adjusting the incubation time of the substrate and/or the exposure time to humid air.

7. Method of claim 6,
wherein adjusting the temperature of the substrate is performed by means of a thermoelectric cooling element which is in contact with a surface of the substrate.

8. Method of any one of claims 1 to 7,
wherein the non-water-soluble polymer comprises polystyrene dissolved in a mixture of cyclohexane and toluene.

9. Method of any one of claims 1 to 8,
wherein the step of detaching the holey polymer layer from the substrate comprises:
applying a detergent, preferably sodium dodecyl sulfate, to the holey polymer layer and the substrate; and
releasing the holey polymer layer from the substrate.

10. Method of any one of claims 1 to 9,
wherein film material comprises carbon or silicon (di)oxide.

11. Method of any one of claims 1 to 10, further comprising, after the holey polymer layer has solidified and has been detached from the substrate:
adhering the holey polymer layer onto a grid, preferably a TEM-grid.

12. Method of claim 12,
wherein the holey polymer layer is attached to the TEM-grid while the film material is deposited thereon.

## Patentansprüche

1. Verfahren zur Herstellung einer löchrigen Folie, umfassend die folgenden Schritte:
Bereitstellen eines Substrats (1) mit ersten Bereichen, die eine hydrophile Substanz aufweisen;
Kühlen des Substrats auf eine Temperatur, die gleich oder niedriger als der Taupunkt ist, um eine selektive Kondensation von Wasser auf den ersten Bereichen zu induzieren, um Tröpfchen zu bilden;
Aufbringen eines nicht wasserlöslichen Polymers auf das die Wassertröpfchen (42) aufweisende Substrat, wobei das Polymer eine löchrige Polymerschicht (44) auf dem Substrat bildet;
Ablösen der löchrigen Polymerschicht vom Substrat, nachdem sie sich verfestigt hat;
Abscheiden eines Folienmaterials auf die löchrige Polymerschicht, um darauf eine Folie zu bilden; und
Auflösen der Polymerschicht.

2. Verfahren nach Anspruch 1, wobei das Substrat ein Glassubstrat aufweist.

3. Verfahren nach Anspruch 1 oder 2, wobei die ersten Bereiche in einem zweiten Bereich enthalten sind, der eine hydrophobe Substanz aufweist.

4. Verfahren nach einem der Ansprüche 1 bis 3, wobei die hydrophile Substanz in den ersten Bereichen über kovalente Bindungen an die Oberfläche des Substrats gebunden ist.

5. Verfahren nach einem der Ansprüche 1 bis 4, wobei das Bereitstellen des Substrats aufweist:
Abscheiden von (3-Glycidyloxypropyl)trimethoxysilan auf das Substrat;
Bereitstellen von Diamino-poly(ethylenglykol) auf das Substrat;
Bereitstellen von 3-(Maleimido)propionsäure-N-hydroxysuccinimidester auf das Substrat;
Bereitstellen von Methoxypolyethylenglykolmaleimid auf das Substrat;
Beleuchten des Substrats mit UV-Strahlung durch eine Fotomaske;
Bereitstellen von Thioalkohol auf das Substrat.

6. Verfahren nach einem der Ansprüche 1 bis 5, ferner aufweisend:
Einstellen der Größe der Wassertröpfchen durch Anpassen der Inkubationszeit des Substrats und/oder der Einwirkzeit von feuchter Luft.

7. Verfahren nach Anspruch 6,
wobei das Einstellen der Temperatur des Substrats mit Hilfe eines thermoelektrischen Kühlelements erfolgt, das mit einer Oberfläche des Substrats in Kontakt steht.

8. Verfahren nach einem der Ansprüche 1 bis 7,
wobei das nicht wasserlösliche Polymer Polystyrol aufweist, das in einer Mischung aus Cyclohexan und Toluol gelöst ist.

9. Verfahren nach einem der Ansprüche 1 bis 8,
wobei der Schritt des Ablösens der löchrigen Polymerschicht von dem Substrat aufweist:
Aufbringen eines Detergens, vorzugsweise Natriumdodecylsulfat, auf die löchrige Polymerschicht und das Substrat; und
Ablösen der löchrigen Polymerschicht von dem Substrat.

10. Verfahren nach einem der Ansprüche 1 bis 9,
wobei das Folienmaterial Kohlenstoff oder Silicium(di)oxid aufweist.

11. Verfahren nach einem der Ansprüche 1 bis 10, ferner umfassend, nachdem sich die löchrige Polymerschicht verfestigt hat und von dem Substrat abgelöst wurde: Anbringen der löchrigen Polymerschicht auf ein Gitter, vorzugsweise ein TEM-Gitter.

12. Verfahren nach Anspruch 12,
wobei die löchrige Polymerschicht an dem TEM-Gitter befestigt ist, während das Folienmaterial darauf abgeschieden wird.

## Revendications

1. Procédé de fabrication d'un film troué, comprenant les étapes suivantes :
la fourniture d'un substrat (1) ayant des premières régions qui comprennent une substance hydrophile ; le refroidissement du substrat à une température qui est égale ou inférieure au point de rosée pour induire une condensation sélective de l'eau sur les premières régions pour former des gouttelettes ;
l'application d'un polymère non soluble dans l'eau sur le substrat comprenant les gouttelettes d'eau (42),
le polymère formant une couche de polymère trouée (44) sur le substrat ;
le détachement de la couche de polymère trouée du substrat après sa solidification ; le dépôt d'un matériau de film sur la couche de polymère trouée pour former un film sur celle-ci ; et la dissolution de la couche de polymère.

2. Procédé selon la revendication 1, dans lequel le substrat comprend un substrat en verre.

3. Procédé selon la revendication 1 ou 2, dans lequel les premières régions sont comprises dans une deuxième région qui comprend une substance hydrophobe.

4. Procédé selon l'une quelconque des revendications 1 à 3, dans lequel la substance hydrophile dans les premières régions est fixée à la surface du substrat par des liaisons covalentes.

5. Procédé selon l'une quelconque des revendications 1 à 4, dans lequel la fourniture du substrat comprend : le dépôt de (3-glycidyloxypropyl)triméthoxysilane sur le substrat ;
la fourniture de diamino-poly(éthylène glycol) sur le substrat ;
la fourniture d'ester N-hydroxysuccinimide de l'acide 3-(maléimido)propionique sur le substrat ; la fourniture de méthoxypolyéthylène glycol maléimide sur le substrat ;
l'éclairage du substrat avec un rayonnement UV à travers un masque photographique ; la fourniture de thioalcool sur le substrat.

6. Procédé selon l'une quelconque des revendications 1 à 5, comprenant en outre : l'ajustement de la taille des gouttelettes d'eau en ajustant le temps d'incubation du substrat et/ou le temps d'exposition à l'air humide.

7. Procédé selon la revendication 6,
dans lequel l'ajustement de la température du substrat est effectué au moyen d'un élément de refroidissement thermoélectrique qui est en contact avec une surface du substrat.

8. Procédé selon l'une quelconque des revendications 1 à 7,
dans lequel le polymère non soluble dans l'eau comprend du polystyrène dissous dans un mélange de cyclohexane et de toluène.

9. Procédé selon l'une quelconque des revendications 1 à 8,
dans laquelle l'étape de détachement de la couche de polymère trouée du substrat comprend :
l'application d'un détergent, de préférence de dodécylsulfate de sodium, sur la couche de polymère trouée et le substrat ; et
la libération de la couche de polymère trouée du substrat.

10. Procédé selon l'une quelconque des revendications 1 à 9,
dans lequel le matériau du film comprend du (di)oxyde de carbone ou de silicium.

11. Procédé selon l'une quelconque des revendications 1 à 10, comprenant en outre, après la solidification de la couche de polymère trouée et son détachement d'avec le substrat :
faire adhérer la couche de polymère trouée à une grille, de préférence une grille de MET.

12. Procédé selon la revendication 12,
dans lequel la couche de polymère trouée est fixée à la grille de MET pendant que le matériau du film est déposé sur celle-ci.
